# EUROPÄISCHE PATENTSCHRIFT

(11) **EP 2 484 939 B1**
(45) Veröffentlichungstag und Bekanntmachung des Hinweises auf die Patenterteilung: **24.05.2017**
(21) Anmeldenummer: 11178948.3
(22) Anmeldetag: 26.08.2011
(51) Int. Cl.: F16H 57/04, F03D 80/70

(54) **Schmierritzel**
Lubricating pinion
Pignon de lubrification

(30) Priorität: 07.02.2011 DE 202011000275 U
(43) Veröffentlichungstag der Anmeldung: 08.08.2012
(73) Patentinhaber: Baier & Köppel GmbH & Co., 91257 Pegnitz (DE)
(72) Erfinder: Köppel, Bernhard, 91257 Pegnitz (DE); Brendel, Jürgen, 91278 Pottenstein (DE); Hess, Stefan, Dr., 90489 Nürnberg (DE)
(74) Vertreter: Zech, Stefan Markus

(56) Entgegenhaltungen:
- CN-U- 201 688 085
- DE-A1- 4 111 570
- JP-A- 2003 042 265

## Beschreibung

Die Erfindung betrifft ein Schmierritzel, das um eine Rotationsachse drehbar ist, zum Aufbringen eines Schmierstoffes auf eine Zahnreihe einer Zahnreihenvorrichtung, beispielsweise eines Zahnrades, eines Zahnkranzes oder einer Zahnstange, wobei das Schmierritzel an seinem Außenumfang eine Vielzahl von Schmierritzelzähnen mit Zahnflanken aufweist, die in Eingriff mit der Zahnreihe der Zahnreihenvorrichtung bringbar sind, wobei mindestens ein Schmierritzelzahn mindestens einen Schmierstoffauslass aufweist, nach dem Oberbegriff von Anspruch 1.

Ein solches Schmierritzel ist bereits aus der JP 2003 042265 A bekannt. Ein Schmierritzel mit Kanälen zur Anförderung von Schmierstoff an den Außenumfang des Schmierritzels ist bereits aus der CN201688085U bekannt. Allerdings weist dieses Schmierritzel keine vorstehenden elastischen Kontaktelemente auf, sondern ist als fluchtender Stapelkörper zweier unterschiedlicher Zahnradelemente gebildet.

Gerade bei Windkraftanlagen, auf die die vorliegende Erfindung aber nicht beschränkt sein soll, zeigt sich das Problem, dass bei einem an einem Antriebsritzel mitlaufenden Schmierritzel dynamische Kräfte, gerade bei den gegebenen erheblichen Anfahrmomenten auftreten, die zu einer Veränderung der momentanen Verzahnungssituation führen können. Auf der anderen Seite soll aber zumindest in jeder Betriebssituation ein ausreichender Eingriff mit dem Antriebsritzel gewährleistet bleiben.
Auch in anderen Einbausituationen bzw. in anderen Anwendungsfällen kann es zweckmäßig sein, wenn das Schmierritzel relativ unempfindlich gegenüber dynamischen Veränderungen in der Eingriffsituation arbeitet.

Ausgehend von dieser Problemstellung besteht die Aufgabe der vorliegenden Erfindung darin, ein Schmierritzel zu schaffen, das eine zuverlässige Schmierstoffversorgung bei hoher Toleranz gegenüber kurzzeitigen Veränderungen der Eingriffsituation schafft.

Diese Aufgabe wird gelöst mit einem Schmierritzel nach den Merkmalen von Anspruch 1.

Nach einem Kerngedanken der vorliegenden Erfindung weist das Schmierritzel über die Zahnflanken in Richtung auf die Zahnreihe der Zahnreihenvorrichtung vorstehende elastische Kontaktelemente auf, die zum Auftragen und Verteilen von Schmierstoff und zum Ausgleich von dynamischen Veränderungen des Eingriffs zwischen Schmierritzel und Zahnreihenvorrichtung ausgebildet sind. Dabei ist das Schmierritzel als Stapelkörper ausgebildet und weist alternierend erste Elemente und zweite Elemente auf, wobei die vorstehenden elastischen Kontaktelemente an den zweiten Elementen ausgebildet sind. Schließlich umfassen die ersten Elemente Mittel zur Anförderung von Schmierstoff an dem Außenumfang des Schmierritzels. Der Schmierstoff wird dabei aus einem Schmierstoffreservoir im zentralen Bereich des Schmierritzels oder aus einer Schmierstoffzuleitung, die Schmierstoff in den zentralen Bereich des Schmierstoffritzels von einer Schmierstoffquelle her fördert, bezogen.

Die vorstehenden elastischen Kontaktelemente dienen insofern dazu, die sich in bestimmten Situationen verbreiternde oder verengende Spalte zwischen den Zähnen des Schmierritzels und der Zahnreihenvorrichtung in gewisser Weise auszugleichen. Weiterhin können die vorstehenden elastischen Kontaktelemente dazu beitragen, den Schmierstoff aufzutragen und/oder zu verteilen. Die erfindungsgemäß vorgesehenen vorstehenden elastischen Kontaktelemente können darüber hinaus einen weiteren vorteilhaften Effekt bewirken, nämlich einen gleichmäßigeren Schichtauftrag erzielen.

Dabei können die vorstehenden elastischen Kontaktelemente wenigstens auch, vorzugsweise hauptsächlich oder auch ausschließlich an den zweiten Elementen vorgesehen sein, bevorzugtermaßen weisen also die ersten Elemente am Außenumfang des Schmierritzels keine vorstehenden elastischen Kontaktelemente auf.

Die Ausbildung als Stapelkörper ermöglicht herstellungstechnisch auf einfache Weise Schmierritzel mit unterschiedlichen Bauhöhen zu realisieren. Gleichzeitig lassen sich erste und zweite Elemente, da sie als Einzellage des Stapelkörpers ausgebildet sind, vergleichweise einfach herstellen. Die ersten Elemente können beispielsweise als Kunststoffteile, Metallteile oder Keramikteile ausgebildet sein, ohne jedoch auf diese Materialauswahl beschränkt zu sein. In einer möglichen Ausgestaltung sind zumindest die ersten Elemente als Spritzgussteil ausgebildet.
Die zweiten Elemente können in einer konkreten Ausgestaltung aus elastischem Kunststoff, Gummi bzw. aus elastischem Material geformt sein. Die zweiten Elemente können beispielsweise aus einer Materiallage entsprechender Dicke ausgestanzt werden. Auch eine spritzgusstechnische Herstellung erscheint möglich.

In einer bevorzugten Ausgestaltung sind die Mittel zur Anförderung von Schmierstoff als radial verlaufende Schmierstoffkanäle ausgebildet, um von einem Nabenbereich des Schmierritzels Schmierstoff an den Außenumfang des Schmierritzels zu fördern.
Dabei kann einem, mehreren oder jedem Zahn des Schmierritzels ein Schmierstoffkanal angeordnet sein.
In einer weiteren, möglichen Ausgestaltung sind die radial verlaufenden Schmierstoffkanäle einseitig offen ausgebildet und jeweils vom benachbarten zweiten Element abgedeckt bzw. verschlossen. Werden die Schmierstoffkanäle in dieser Weise durch radial verlaufende offene Schmierstoffkanäle im ersten Element ausgebildet, so sind diese ersten Elemente besonders einfach, bevorzugterweise spritzgusstechnisch, herstellbar.
Die zweiten Elemente können jeweils als scheibenförmige Elemente aus einem elastischen Material, insbesondere Elastomermaterial oder Gummimaterial ausgebildet sein. Die vorstehenden elastischen Kontaktelemente können dann jeweils einstückig an ihnen angeformt sein. Unter "scheibenförmig" ist hier ein Körper von homogener Dicke zu verstehen, wobei die Außenkontur durch die Außenkontur des Schmierritzels vorgegeben ist, also dem Verzahnungsmuster folgt, wobei erfindungsgemäß zumindest bereichsweise ein Überstand gegenüber dem Verzahnungsmuster, das durch die ersten Elemente vorgegeben ist, besteht. Der Überstand kann dabei über den gesamten Außenumfang eine feste Größe haben von z. B. 1-2 mm. Alternativ ist es auch möglich, dass der Überstand variiert, beispielsweise an den Kämmen einen anderen Wert als an den Zahnflanken bzw. in den Zahnvertiefungen aufweist, insbesondere an den Kämmen und Zahnflanken einen größeren Wert aufweist als an den Zahnvertiefungen.

In einer alternativen oder möglicherweise auch kumulativ vorliegenden Ausgestaltung weist das zweite Element im Bereich des Außenumfangs des Schmierritzels bürstenförmige Elemente auf, die die vorstehenden elastischen Kontaktelemente bilden oder als Teil der vorstehenden elastischen Kontaktelemente wirken.

Das Schmierritzel kann auf einer feststehenden Welle gelagert sein, die an ihrem Außenumfang eine axial verlaufende Schmierstoffausgabenut zur Ausgabe von Schmierstoff aus einer in der Welle gebildeten Schmierstoffzuführung oder eines innerhalb der Welle gebildeten Schmierstoffreservoirs aufweist. Die Schmierstoffausgabenut ist bevorzugterweise dabei derart breit ausgestaltet, dass keine bzw. nur vernachlässigbare Druckgradienten entstehen, also die gleichmäßige Schmierstoffbeschickung für alle Lagen des Stapelkörpers mit gleichem Volumenstrom sichergestellt ist.

Da es sich um eine feststehende Welle handelt, also die Rotationsposition der Welle in Betrieb des Schmierritzels unverändert bleibt, wird die Schmierstoffausgabenut vorzugsweise derart relativ zu der abzuschmierenden Zahnreihenvorrichtung ausgerichtet, dass jeweils nur die Schmierstoffkanäle eines Schmierritzelzahnes mit der Schmierstoffausgabenut in Fluidkontakt treten, die sich gerade kurz vor oder im Eingriff mit der Zahnreihenvorrichtung befinden. Auf diese Weise ist sichergestellt, dass Schmierstoff nur dann gefördert wird, wenn ein Einlass des entsprechenden Schmierstoffkanals in einen festgelegten Winkelbereich eintritt. Tritt der Einlass des entsprechenden Schmierstoffkanals aus dem Winkelbereich aus, wird der Schmierstoffzufluss in den entsprechenden Kanal abgeschnitten. Die vorstehend beschriebene Maßnahme, eine Schmierstoffförderung nur in einem bestimmten Winkelbereich zuzulassen, erscheint sowohl sinnvoll, wenn sich das Schmierritzel umlaufend dreht, insbesondere aber auch bei oszillierenden bzw. zyklisch hin- und herfahrenden Bewegungen, bei denen unter Umständen kein kompletter Umlauf erzielt wird, erscheint diese Maßnahme vorteilhaft. Diese Maßnahme erscheint schon aus Ressourcen schonenden Gesichtspunkten geboten. Darüber hinaus wird die Menge an ausgebrachtem Schmierstoff, der zumindest potenziell eine Umweltgefährdung darstellen könnte, erheblich reduziert.

In einer konkreten Ausgestaltung ist das Schmierritzel an einer Montageplatte befestigt und die Welle kann über eine Rotationspositionsfestlegung in ihrer rotatorischen Position relativ zur Montageplatte ggf. lösbar festgelegt werden, um die rotatorische Ausrichtung der Schmierstoffausgabenut in Bezug auf die mit Schmierstoff zu versehende Zahnreihenvorrichtung festzulegen. Alternativ oder zusätzlich ist es auch möglich, die Welle über eine Neigungspositionsfestlegung relativ zur Montageplatte vorzugsweise lösbar festzulegen, um die Welle in ihrer Neigungsausrichtung einstellen zu können.

Bevorzugtermaßen weisen die Schmierstoffkanäle endseitig ein oder mehrere Düsen mit einer Engstelle und einer sich auf einen Schmierstoffauslass hin erstreckenden Querschnittserweiterung auf. In einer konkreten Ausgestaltung ist ausgehend von einem radial verlaufenden Schmierstoffkanal eine Verzweigung vorgesehen, an der sich der Schmierstoffkanal in einen ersten und zweiten Teilkanal aufteilt. Es kann in jedem der beiden Teilkanäle eine Düse ausgebildet sein, die den Schmierstoff an einen innerhalb der Zahnflanke vorgesehenen Auslauf fördert.

Weiterhin kann vorgesehen sein, dass die Schmierstoffkanäle schmierstoffkanalaufwärts der ein oder mehreren Düsen sich in Strömungsrichtung stufenförmig oder graduell erweiternde Abschnitte aufweisen.

In einer konkret bevorzugten Ausgestaltung beträgt der Austrittswinkel der Düsen in einer Normalebene zur Axialrichtung des Schmierritzels zwischen 40° und 60°, vorzugsweise zwischen 50° und 55°.

In einer konkreten Ausgestaltung ist das Schmierritzel als Stapelkörper alternierend aus jeweils mindestens 3, vorzugsweise aus jeweils mindestens 6 ersten und zweiten Elementen gebildet.

Weiterhin kann unterhalb des Schmierritzels eine Schmierstoffaufnahmevorrichtung, insbesondere in Gestalt einer Schmierstoffaufnahmeschale vorgesehen sein. Die Schmierstoffaufnahmevorrichtung kann dabei auch ein Schmierabkratzelement umfassen, mit dem überschüssiger Schmierstoff von der abzuschmierenden Zahnreihenvorrichtung abgekratzt und in die Schmierstoffaufnahmevorrichtung überführt werden kann. Besonders bevorzugt fängt insofern die Schmierstoffaufnahmevorrichtung, Schmierstoff, der vom Schmierritzel, insbesondere beim Auftragen von Schmierstoff, abtropft sowie alten Schmierstoff, der aus der Zahnreihenvorrichtung hinausgedrückt wird, auf.

Die Erfindung wird nachstehend auch hinsichtlich weiterer Merkmale und Vorteile anhand der Beschreibung eines Ausführungsbeispiels und unter Bezugnahme auf die nachstehenden Zeichnungen näher erläutert.

Hierbei zeigen:
- Fig. 1: eine Ausführungsform des erfindungsgemäßen Schmierritzels in perspektivischer Ansicht;
- Fig. 2: das Schmierritzel nach Fig. 1, drehbeweglich auf einer an einer Montageplatte befestigten Welle montiert;
- Fig. 3: das Schmierritzel nach Fig. 2 in einer Ansicht entlang der Linie III-III;
- Fig. 4: erstes Element für ein Schmierritzel nach den Fig. 1 bis 3 in einer perspektivischen Ansicht von oben;
- Fig. 5: das erste Element nach Fig. 4 in einer perspektivischen Ansicht von unten;
- Fig. 6: das erste Element nach den Fig. 4 und 5 in einer Draufsicht;
- Fig. 7: die Welle für ein Schmierritzel nach den Fig. 1 bis 5 in einer Schnittansicht; und
- Fig. 8: für die Ausführungsform des Schmierritzels nach den Fig. 1 bis 7 ein zweites Element in Draufsicht.

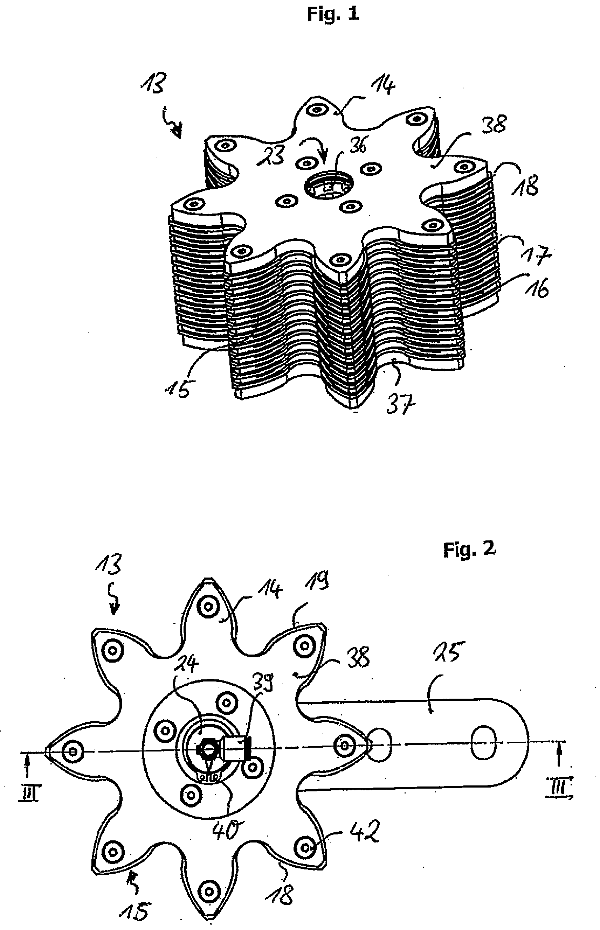

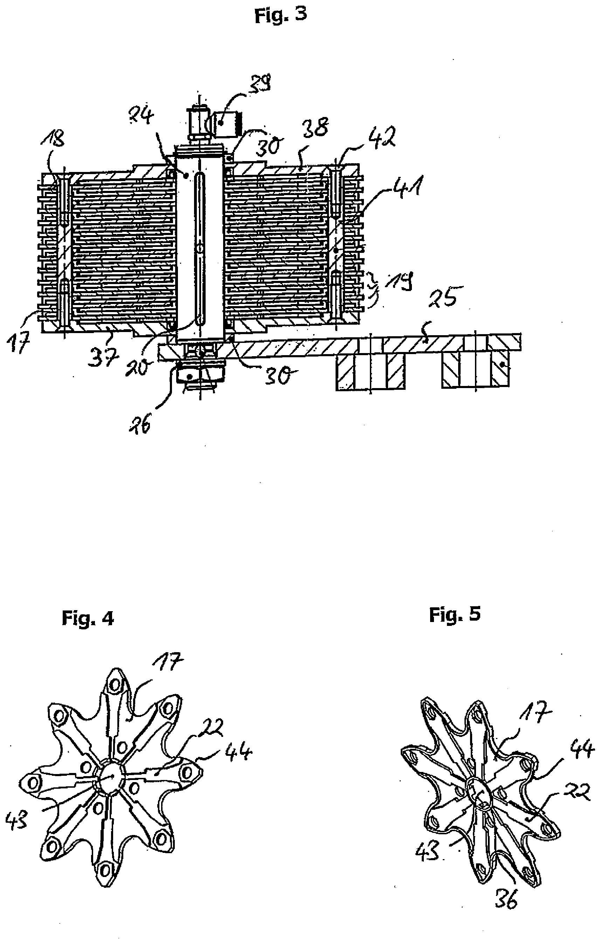

In Fig. 1 ist eine Ausführungsform eines Schmierritzels 13 in perspektivischer Ansicht dargestellt. Das Schmierritzel 13 weist bei der vorliegenden Ausführungsform acht Schmierritzelzähne 14 mit entsprechenden Zahnflanken 15 auf, wobei die vorliegende Erfindung unabhängig von der konkreten Anzahl der Schmierritzelzähne 14 ist, also auch auf Schmierritzel 13 mit weit höherer oder auch noch geringerer Anzahl von Schmierritzelzähnen anwendbar ist. Das Schmierritzel 13 weist zwei endseitige Abdeckplatten 37, 38 auf und ist als Stapelkörper ausgebildet, d. h. zwischen den Abdeckplatten 37, 38 sind eine Vielzahl von einzelnen Schichtelementen ausgebildet. Die Schichtelemente sind dabei durch erste und zweite Elemente 16, 17 definiert, die alternierend angeordnet sind. Die ersten Elemente 17 weisen eine Mehrzahl von Schmierstoffkanälen 25 auf (vgl. Fig. 4 bis 6), die an Schmierstoffauslässen 16 am Außenumfang des Schmierritzels 13 münden.

Die zweiten Elemente 18 sind bei der vorliegenden Ausführungsform als homogener Schichtkörper ausgebildet und bestehen aus elastischem Material. Die zweiten Elemente sind gegenüber den ersten Elementen 17 derart größer bemessen, dass sie über die von den ersten Elementen 17 vorgegebene Zahnflankenkontur geringfügig vorstehen und so elastische Kontaktelemente 19 definieren, die zum Auftragen und Verteilen von Schmierstoff und zum Ausgleich von dynamischen Veränderungen des Eingriffs zwischen Schmierritzel 13 und einer mit Schmierstoff zu beaufschlagenden Zahnreihenvorrichtung, beispielsweise eines Zahnkranzes, ausgebildet sind. Aus Fig. 1 wird weiter ersichtlich, dass das Schmierritzel 13 entlang seiner zentralen Achse einen Nabenbereich 23 definiert, an dem über entsprechende Einlässe 36 Schmierstoff über die jeweiligen Schmierstoffkanäle 22 zu den Schmierstoffauslässen 16 geführt werden kann.

In Fig. 2 ist das Schmierritzel 13 nach Fig. 1 auf einer Welle 24 drehbeweglich montiert in Draufsicht dargestellt. Die Welle 24 selbst ist an einer Montageplatte 25 befestigt, über die sich das Schmierritzel 13 an einer Montageposition, beispielsweise in kämmender Position an einem Antriebsritzel oder einem Zahnkranzelement befestigen lässt.

Aus der Draufsicht nach Fig. 2 wird deutlich, dass der Überstand der zweiten Elemente 18, welche die vorstehenden elastischen Kontaktelemente 19 bei der vorliegenden Ausführungsform definieren, nur bereichsweise ausgebildet ist, nämlich entlang der Zahnflanken 15 und der Zahnkämme; im Bereich der Zahnvertiefungen ist bei der vorliegenden Ausführungsform hingegen im Wesentlichen kein bzw. kaum ein Überstand gegeben.

Dem Schmierritzel 13 kann ein Sensor zugeordnet sein, der die Drehung des Schmierritzels 13 beispielsweise zu Kontrollzwecken erfasst. Der Sensor kann dabei derart ausgestaltet sein, dass er jegliche Bewegung des Schmierritzels 13 erfasst oder diskontinuierlich anspricht, wenn ein bestimmter Umlauf, beispielsweise eine achtel Drehung oder ein Komplettumlauf erreicht ist. In einer möglichen Ausgestaltung kann der Sensor fix montiert sein und das Passieren eines Zahnes erfassen. In einer weiteren möglichen Ausgestaltung ist das Schmierritzel mit einer Lochscheibe drehfest verbunden. Ein Sensor, der gegenüber dem Schmierritzel bzw. der sich mitdrehenden Lochscheibe ortsfest, beispielsweise auf der Welle 24, angeordnet ist, kann dann induktiv oder durch Lichtschranke das Passieren von Löchern der Lochscheibe erfassen und so die fortlaufende Drehung des Schmierritzels abtasten. In einer konkreten Ausgestaltung kann auf der Welle 24 auch ein Hallsensor 39 befestigt sein, der gegenüber einem auf der gegenüberliegenden Abdeckplatte 38 positionierten, umlaufenden Magneten 40 entsprechend ausgerichtet ist, um eine jeweilige Umdrehung des Schmierritzels 13 erfassen zu können.

In Fig. 3 ist das Schmierritzel in einer Schnittansicht entlang der Linie III in Fig. 2 dargestellt. Aus der Schnittansicht nach Fig. 3 wird zunächst ersichtlich, dass der erste Elemente 17 und zweite Elemente 18 umfassende Stapelkörper durch Gewindehülsen 41, die den Stapel aus ersten Elementen 17 und zweiten Elementen 18 durchdringen und über die Befestigungsschrauben 42 mit den Abdeckplatten 37, 38 verschraubt sind, zusammengehalten wird. Durch die Gewindehülsen 41 im Zusammenspiel mit den Befestigungsschrauben 42 wird zunächst sichergestellt, dass alle ersten Elemente 17 sowie alle zweiten Elemente 18 zusammen mit den Abdeckplatten 37, 38 in der jeweils festgelegten rotatorischen Position gehalten sind und so ein Schmierritzel mit jeweils definierten durchgehenden Zahnflanken bzw. Zahnkämmen gegeben ist. Weiterhin wird über die Befestigungsschrauben 42, die Gewindehülsen 41 und die Abdeckplatten 37, 38 auch eine axiale Festlegung definiert.

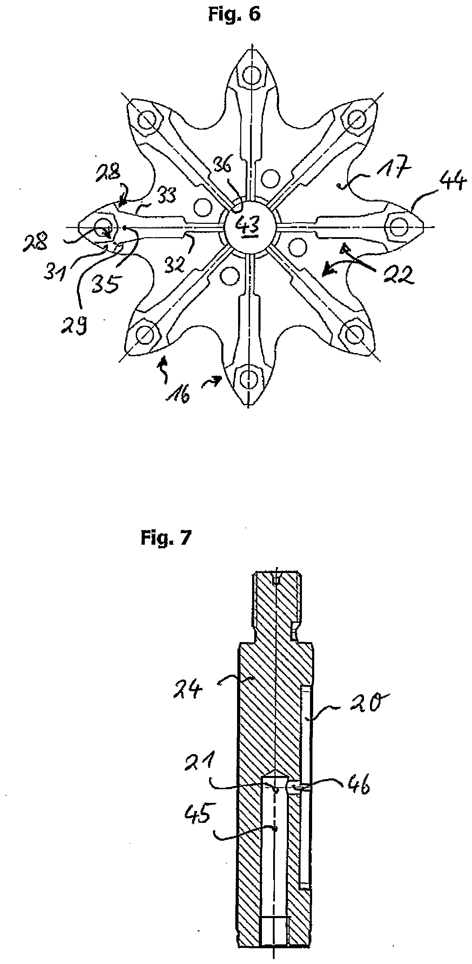

Der so gegebene Stapelkörper sitzt, wie bereits erwähnt, auf der feststehenden Welle 24, und ist dort über Lagerringe 30 axial gehalten und drehbeweglich gelagert. In ihrem Inneren weist die feststehende Welle 24 eine Schmierstoffzuführung 21 (vgl. Fig. 7) auf. Die Schmierstoffzuführung 21 steht in Fluidverbindung mit einer am Außenumfang axial verlaufenden Schmierstoffausgabenut 20. Die Schmierstoffausgabenut 20 weist eine axiale Erstreckung dergestalt auf, dass sie den gesamten Nabenbereich 23 des Schmierritzels 13, an dem erste Elemente 17 umlaufen, abdeckt. Um alle ersten Elemente 17 gleichmäßig und ohne Druckgradienten mit Schmierstoff zu versorgen, ist die Schmierstoffausgabenut 20 vergleichsweise breit ausgebildet. Die Beschickung der Schmierstoffausgabenut 20 erfolgt in ihrem mittleren Bereich über die Schmierstoffzuführung 21.

Zwischen der Welle 24 und der Montageplatte 25 ist eine Rotationspositionsfestlegung 26 wirksam, die die rotatorische Position der Welle 24 relativ zur Montageplatte 25 vorzugsweise lösbar festlegt.

Weiterhin kann eine Neigungspositionsfestlegung, beispielsweise eine arretierbare Kugelpfanne, vorgesehen sein, um die Neigung der Welle 24 relativ zur Montageplatte 25 einstellbar bzw. feststellbar zu verändern.

In Fig. 4 ist das erste Element 17 für ein Schmierritzel 13 nach den Figuren 1 bis 3 in einer perspektivischen Ansicht von oben und in Fig. 5 in einer perspektivischen Ansicht von unten dargestellt. Fig. 6 zeigt das erste Element 17 nach Fig. 4 und Fig. 5 in einer Draufsicht.

Ausgehend von einer zentralen Bohrung 43, die bei einem aus einer Vielzahl von ersten Elementen 17 und zweiten Elementen 18 zusammengesetztem Schmierritzel 13 dann einen Teil des Nabenbereichs 23 des Schmierritzels 13 definieren, erstrecken sich die bereits erwähnten Schmierstoffkanäle 22 radial nach außen, bis an distale Endbereiche 44. Die distalen Endbereiche 44 bilden durch eine Vielzahl von ersten Elementen 17, jeweils beabstandet durch zweite Elemente 18 zu einem Schmierritzel 13 zusammengesetzt, die Schmierritzelzähne 14 des Schmierritzels 13 aus. Bei der vorliegenden Ausführungsform weist das erste Element 17 jeweils 8 äquidistant angeordnete distale Endbereiche 44 auf, denen jeweils ein von der Zentralbohrung 43 ausgehender Schmierstoffkanal 22 zugeordnet ist. Ausgehend vom der Zentralbohrung 43 zugewandten Einlass 36 verlaufen die Schmierstoffkanäle 22 zunächst jeweils mit konstantem Querschnitt, auf den ein sich ein nahezu in Stufenform erweiternder Abschnitt 32 folgt. Nach einem weiteren Abschnitt mit konstantem Querschnitt folgt in Fluidrichtung nochmals ein sich graduell erweiternder Abschnitt 33.

Die Schmierstoffkanäle 22 sind einseitig offen, also trogförmig ausgebildet und werden durch das jeweils gegenüberliegende zweite Element 18 dichtend abgedeckt bzw. verschlossen. Im Bereich der sich graduell erweiternden Abschnitte 33 definieren die Schmierstoffkanäle 22 jeweils eine Verzweigung 35, die Schmierstoffkanäle 22 werden also in zwei Teilkanäle aufgeteilt, wobei an der Verzweigung 35 zwei Düsen 28 ausgebildet sind, aus denen der Schmierstoff an entsprechende Schmierstoffauslässe gefördert wird. Die beiden Düsen 28 weisen jeweils eine Engstelle 29 und eine auf den Schmierstoffauslass 16 hinführende Querschnittserweiterung 31 auf.

In Fig. 7 ist die Welle 24 nach der vorliegenden Ausführungsform nochmals in einer Querschnittsansicht dargestellt. Der zentralen Achse folgend erstreckt sich eine Bohrung 45 etwa über die halbe axiale Länge, die zusammen mit einer radialen Verbindung 46 die Schmierstoffzuführung 21 definiert. Die radiale Verbindung 46 als Teil der Schmierstoffzuführung 21 kommuniziert einerseits mit der zentralen Bohrung 45 der Welle 24 und andererseits mit der Schmierstoffausgabenut 20, die den Schmierstoff am Nabenbereich 23 des Schmierritzels 13 in die im entsprechenden Winkelbereich liegenden Einlässe 36 der entsprechenden Schmierstoffkanäle 22 überführt. Es wird insofern sichergestellt, dass von den bei der vorliegenden Ausführungsform pro erstem Element 17 vorgesehenen acht Schmierstoffkanälen 22 jeweils nur ein Schmierstoffkanal 22 mit der Schmierstoffzuführung 21 in Fluidverbindung tritt, nämlich derjenige Schmierstoffkanal 22, der mit seinem Einlass 36 in den Winkelbereich der Welle 24 eingetreten ist, in dem die axiale Schmierstoffausgabenut 20 vorgesehen ist.

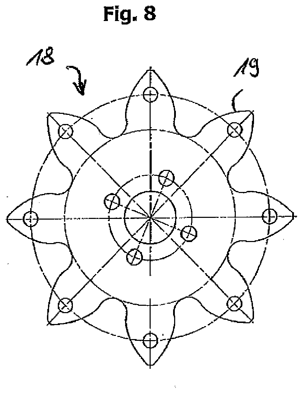

In Fig. 8 ist ein bei der vorliegenden Ausführungsform zum Einsatz kommendes zweites Element 18 veranschaulicht. Bei der vorliegenden Ausführungsform erfüllen die zweiten Elemente 18 eine Mehrfachfunktion. Zum Einen definieren sie die vorstehenden elastischen Kontaktelemente 19 durch einen entsprechenden Überstand über die ersten Elemente 17; zum Anderen dichten sie die trogförmig ausgebildeten Schmierstoffkanäle 22 in den ersten Elementen 17 fluiddicht ab, sodass auch die ersten Elemente 17 vergleichsweise einfach eingestellt werden können.

### Bezugszeichenliste

- 13: Schmierritzel
- 14: Schmierritzelzähne
- 15: Zahnflanken (Schmierritzel)
- 16: Schmierstoffauslass
- 17: Erste Elemente
- 18: Zweite Elemente
- 19: Vorstehende elastische Kontaktelemente
- 20: Schmierstoffausgabenut
- 21: Schmierstoffzuführung
- 22: Schmierstoffkanal
- 23: Nabenbereich
- 24: Welle
- 25: Montageplatte
- 26: Rotationspositionsfestlegung
- 28: Düsen
- 29: Engstelle (Düse)
- 30: Lagerringe
- 31: Querschnittserweiterung (Düse)
- 32, 33: sich erweiternde Abschnitte
- 35: Verzweigung
- 36: Einlass (Schmierstoffkanal)
- 37, 38: Abdeckplatten
- 39: Hallsensor
- 40: umlaufender Magnet
- 41: Gewindehülse
- 42: Befestigungsschrauben
- 43: zentrale Bohrung
- 44: distaler Endbereich
- 45: Bohrung (Welle)
- 46: radiale Verbindung (Welle)

## Patentansprüche

1. Schmierritzel, das um eine Rotationsachse drehbar ist, zum Aufbringen eines Schmierstoffes auf eine Zahnreihe einer Zahnreihenvorrichtung, beispielsweise eines Zahnrades, eines Zahnkranzes oder einer Zahnstange,
wobei das Schmierritzel (13) an seinem Außenumfang eine Vielzahl von Schmierritzelzähnen (14) mit Zahnflanken (15) aufweist, die in Eingriff mit der Zahnreihe der Zahnreihenvorrichtung bringbar sind,
wobei mindestens ein Schmierritzelzahn (14) mindestens einen Schmierstoffauslass (16) aufweist,
wobei
das Schmierritzel (13) über die Zahnflanken in Richtung auf die Zahnreihe (10) der Zahnreihenvorrichtung vorstehende elastische Kontaktelemente (19) aufweist, die zum Auftragen und Verteilen von Schmierstoff und zum Ausgleich von dynamischen Veränderungen des Eingriffs zwischen Schmierritzel (13) und Zahnreihenvorrichtung ausgebildet sind und wobei
das Schmierritzel als Stapelkörper ausgebildet ist und alternierend erste Elemente (17) und zweite Elemente (18) aufweist, wobei die vorstehenden elastischen Kontaktelemente (19) nur an den zweiten Elementen (18) ausgebildet sind, **dadurch gekennzeichnet, dass**
die ersten Elemente (17) zur Anförderung von Schmierstoff aus einem Schmierstoffreservoir oder einer Schmierstoffzuleitung (21) an den Außenumfang des Schmierritzels (13) ausgebildet sind.

2. Schmierritzel nach Anspruch 1,
**dadurch gekennzeichnet, dass**
die ersten Elemente (17) radial verlaufende Schmierstoffkanäle (22) umfassen, um von einem Nabenbereich (23) des Schmierritzels (13) Schmierstoff an den Außenumfang des Schmierritzels zu fördern.

3. Schmierritzel nach Anspruch 2,
**dadurch gekennzeichnet, dass**
die radial verlaufenden Schmierstoffkanäle (22) innerhalb der ersten Elemente (17) einseitig offen ausgebildet sind und durch das jeweils benachbarte weitere zweite Element (18) abgedeckt bzw. verschlossen sind.

4. Schmierritzel nach einem der Ansprüche 1 bis 3,
**dadurch gekennzeichnet, dass**
die zweiten Elemente (18) jeweils als scheibenförmige Elemente aus einem elastischen Material, insbesondere Elastomermaterial oder Gummi ausgebildet und die vorstehenden elastischen Kontaktelemente (19) jeweils einstückig an ihnen ausgebildet sind.

5. Schmierritzel nach einem der Ansprüche 1 bis 4,
**dadurch gekennzeichnet, dass**
das zweite Element (18) im Bereich des Außenumfangs des Schmierritzels (13) bürstenförmige Elemente aufweist, die vorstehende elastische Kontaktelemente bilden oder als Teil der vorstehenden elastischen Kontaktelemente wirken.

6. Schmierritzel nach einem der Ansprüche 1 bis 5,
**dadurch gekennzeichnet, dass**
das Schmierritzel auf einer feststehenden Welle (24) lagerbar ist, die an ihrem Außenumfang eine axial verlaufende Schmierstoffausgabenut (20) aufweist zur Ausgabe von Schmierstoff aus einer in der Welle (24) gebildeten Schmierstoffführung (21) oder eines innerhalb der Welle (24) gebildeten Schmierstoffreservoirs.

7. Schmierritzel nach Anspruch 6,
**dadurch gekennzeichnet, dass**
das Schmierritzel an einer Montageplatte (25) befestigbar ist und die Welle (24) über eine Rotationspositionsfestlegung (26) in ihrer rotatorischen Position relativ zur Montageplatte (25) und/oder über eine Neigungspositionsfestlegung in ihrer Neigungsausrichtung festlegbar ist.

8. Schmierritzel nach einem der Ansprüche 2 bis 7,
**dadurch gekennzeichnet, dass**
die Schmierstoffkanäle (22) endseitig ein oder mehrere Düsen (28) mit einer Engstelle (29) und einer sich auf einen Schmierstoffauslass (16) hin erstreckenden Querschnittserweiterung (31) ausbilden.

9. Schmierritzel nach Anspruch 8,
**dadurch gekennzeichnet, dass**
die Schmierstoffkanäle (22) schmierstoffkanalaufwärts der ein oder mehreren Düsen (28) sich in Strömungsrichtung stufenförmig oder graduell erweiternde Abschnitte (32, 33) aufweisen.

10. Schmierritzel nach Anspruch 8 oder 9,
**dadurch gekennzeichnet, dass**
der Austrittswinkel der Düsen (28) in einer Normalebene zur Axialrichtung des Schmierritzels (13) zwischen 40° und 60°, vorzugsweise zwischen 50° und 55°, beträgt.

11. Schmierritzel nach einem der Ansprüche 1 bis 10,
**dadurch gekennzeichnet, dass**
das Schmierritzel (13) als Stapelkörper alternierend aus jeweils mindestens 3, vorzugsweise aus jeweils mindestens 6 ersten und zweiten Elementen (18) gebildet ist.

12. Schmierritzel nach einem der Ansprüche 1 bis 11,
**dadurch gekennzeichnet, dass**
unterhalb des Schmierritzels (13) eine Schmierstoffaufnahmevorrichtung (34), insbesondere in Gestalt einer Schmierstoffaufnahmeschale vorgesehen sein kann.

## Claims

1. A lubricating pinion rotatable about an axis of rotation for applying lubricant to a row of teeth of a teeth row device, for example a gear-wheel, a gear rim or a gear rack,
wherein the lubricating pinion (13), at its outer circumference, has a plurality of lubricating pinion teeth (14) with tooth flanks (15), which can be brought into engagement with the row of teeth of the teeth row device,
wherein at least one lubricating pinion tooth (14) has at least one lubricant outlet (16),
wherein
the lubricating pinion (13) has elastic contact elements (19) projecting beyond the tooth flanks toward the row of teeth (10) of the teeth row device which are formed to apply and distribute lubricant and to compensate for dynamic changes of the engagement between the lubricating pinion (13) and the teeth row device, and
wherein
the lubricating pinion is configured as a stacked body and alternatingly has first elements (17) and second elements (18), with the projecting elastic contact elements (19) being formed only on the second elements (18),
**characterized in that**
the first elements (17) are configured to supply lubricant from a lubricant reservoir or a lubricant feed line (21) to the outer circumference of the lubricating pinion (13).

2. The lubricating pinion according to claim 1,
**characterized in that**
the first elements (17) comprise radially extending lubricant conduits (22) in order to convey lubricant from a hub area (23) of the lubricating pinion (13) to the outer circumference of the lubricating pinion.

3. The lubricating pinion according to claim 2,
**characterized in that**
the radially extending lubricant conduits (22) are configured within the first elements (17) to be open on one side, and are covered or closed by the respective adjacent further second element (18).

4. The lubricating pinion according to any one of claims 1 to 3,
**characterized in that**
the second element (18) is formed in each case as a disc-shaped element from an elastic material, in particular elastomer material or rubber, and the projecting elastic contact elements (19) each are formed on them in one piece.

5. The lubricating pinion according to any one of claims 1 to 4,
**characterized in that**
the second element (18), in the area of the lubricating pinion's (13) outer circumference, has brush-shaped elements forming projecting elastic contact elements or acting as part of the projecting elastic elements.

6. The lubricating pinion according to any one of claims 1 to 5,
**characterized in that**
the lubrication pinion is supportable on a stationary shaft (24) which has an axially extending lubricant output groove (20) at its outer circumference for outputting lubricant from a lubricant guide (21) formed in the shaft (24) or a lubricant reservoir formed in the shaft (24).

7. The lubricating pinion according to claim 6,
**characterized in that**
the lubricating pinion is attachable to a mounting plate (25), and the shaft (24) is fixable in its rotary position relative to the mounting plate (25) via a rotation position fixing means (26) and/or in its orientation of inclination via an inclination position fixing means.

8. The lubricating pinion according to any one of claims 2 to 7,
**characterized in that**
the lubricant conduits (22), at the end side, form one or more nozzles (28) having a constriction (29) and a cross-sectional expansion (31) extending toward a lubricant outlet (16).

9. The lubricating pinion according to claim 8,
**characterized in that**
upstream of the one or more nozzles (28) along the lubricant conduits, the lubricant conduits (22) have sections (32, 33) expanding in a step-shape or gradually in the flow direction.

10. The lubricating pinion according to claim 8 or 9,
**characterized in that**
the nozzles' (28) exit angle in a normal plane to the lubricating pinion's (13) axial direction is between 40° and 60°, preferably between 50° and 55°.

11. The lubricating pinion according to any one of claims 1 to 10,
**characterized in that**
the lubricating pinion (13) is formed as a stacked body from in each case at least 3, preferably from in each case at least 6 first and second elements (18) in an alternating manner.

12. The lubricating pinion according to any one of claims 1 to 11,
**characterized in that**
a lubricant receiving means (34), in particular in the form of a lubricant receiving cup, may be provided below the lubricating pinion (13).

## Revendications

1. Pignon de lubrification pouvant tourner autour d'un axe de rotation pour l'application d'un lubrifiant sur une rangée de dents d'un dispositif à rangée de dents, par exemple d'une roue dentée, d'une couronne dentée ou d'une crémaillère,
sachant que le pignon de lubrification (13) présente sur sa circonférence extérieure une pluralité de dents de pignon de lubrification (14) avec des flancs de dents (15) qui peuvent être mis en prise avec la rangée de dents du dispositif à rangée de dents,
sachant qu'au moins une dent de pignon de lubrification (14) présente au moins une sortie de lubrifiant (16),
sachant que
le pignon de lubrification (13) présente des éléments de contact (19) élastiques en saillie des flancs de dent en direction de la rangée de dents (10) du dispositif à rangée de dents, lesquels sont constitués pour l'application et la distribution de lubrifiant et pour la compensation de modifications dynamiques de la prise entre pignon de lubrification (13) et dispositif à rangée de dents et sachant que
le pignon de lubrification est constitué comme corps à empilage et présente en alternance des premiers éléments (17) et des deuxièmes éléments (19), sachant que les éléments de contact (19) élastiques en saillie ne sont constitués qu'au niveau des deuxièmes éléments (18),
**caractérisé en ce que**
les premiers éléments (17) sont constitués pour l'acheminement de lubrifiant depuis un réservoir de lubrifiant ou une conduite d'arrivée de lubrifiant (21) à la circonférence extérieure du pignon de lubrification (13).

2. Pignon de lubrification selon la revendication 1,
**caractérisé en ce que**
les premiers éléments (17) comprennent des canaux de lubrifiant (22) orientés radialement pour acheminer du lubrifiant depuis une zone de moyeu (23) du pignon de lubrification (13) à la circonférence extérieure du pignon de lubrification.

3. Pignon de lubrification selon la revendication 2,
**caractérisé en ce que**
les canaux de lubrifiant (22) orientés radialement sont constitués de manière ouverte d'un côté à l'intérieur des premiers éléments (17) et sont recouverts ou obturés par le deuxième élément (18) supplémentaire respectivement adjacent.

4. Pignon de lubrification selon l'une des revendications 1 à 3,
**caractérisé en ce que**
les deuxièmes éléments (18) sont constitués respectivement comme éléments en forme de disque composés d'un matériau élastique, en particulier d'un matériau élastomère ou caoutchouc, et les éléments de contact (19) élastiques en saillie sont constitués respectivement d'une même pièce sur eux.

5. Pignon de lubrification selon l'une des revendications 1 à 4,
**caractérisé en ce que**
le deuxième élément (18) présente, dans la zone de la circonférence extérieure du pignon de lubrification (13), des éléments en forme de brosse qui forment des éléments de contact élastiques en saillie ou agissent comme partie des éléments de contact élastiques en saillie.

6. Pignon de lubrification selon l'une des revendications 1 à 5,
**caractérisé en ce que**
le pignon de lubrification peut être logé sur un arbre (24) fixe qui présente sur sa circonférence extérieure une rainure de délivrance de lubrifiant (20) orientée axialement pour la délivrance de lubrifiant depuis un orifice de lubrifiant (21) formé dans l'arbre (24) ou un réservoir de lubrifiant formé à l'intérieur de l'arbre (24).

7. Pignon de lubrification selon la revendication 6,
**caractérisé en ce que**
le pignon de lubrification peut être fixé à une plaque de montage (25) et l'arbre (24) peut être arrêté via un arrêt de position de de rotation (26) dans sa position de rotation relativement à la plaque de montage (25) et/ou via un arrêt de position d'inclinaison dans son orientation d'inclinaison.

8. Pignon de lubrification selon l'une des revendications 2 à 7,
**caractérisé en ce que**
les canaux de lubrifiant (22) constituent en extrémité une ou plusieurs tuyères (28) avec un rétrécissement (29) et un élargissement en coupe transversale (31) qui s'étend jusqu'à une sortie de lubrifiant (16).

9. Pignon de lubrification selon la revendication 8,
**caractérisé en ce que**
les canaux de lubrifiant (22) présentent, en amont de la ou des plusieurs tuyères (28) du canal de lubrifiant, des sections (32, 33) qui s'élargissent par étapes ou graduellement en direction de l'écoulement.

10. Pignon de lubrification selon la revendication 8 ou 9,
**caractérisé en ce que**
l'angle de sortie des tuyères (28) est compris entre 40° et 60°, de préférence entre 50° et 55°, dans un plan normal par rapport à la direction axiale du pignon de lubrification (13).

11. Pignon de lubrification selon l'une des revendications 1 à 10,
**caractérisé en ce que**
le pignon de lubrification (13) est constitué comme corps à empilage composé en alternance de respectivement au moins 3, de préférence de respectivement au moins 6 premiers et deuxièmes éléments (18).

12. Pignon de lubrification selon l'une des revendications 1 à 11,
**caractérisé en ce que**
un dispositif de réception de lubrifiant (34), en particulier sous forme d'une cuvette de réception de lubrifiant, peut être prévu sous le pignon de lubrification (13).
